(19) Europäisches Patentamt
European Patent Office
Office européen des brevets

(11) Veröffentlichungsnummer: **0 001 557**
**B1**

(12) **EUROPÄISCHE PATENTSCHRIFT**

(45) Veröffentlichungstag der Patentschrift: **22.07.81**

(21) Anmeldenummer: **78100935.2**

(22) Anmeldetag: **19.09.78**

(51) Int. Cl.³: **B 23 K 11/22, B 26 F 3/00**

(54) Verfahren zum Trennen eines eine Vielzahl von Drähten aufweisenden Seiles.

(30) Priorität: **18.10.77 DE 2746803**

(43) Veröffentlichungstag der Anmeldung:
**02.05.79 Patentblatt 79/9**

(45) Bekanntmachung des Hinweises auf die Patenterteilung:
**22.07.81 Patentblatt 81/29**

(84) Benannte Vertragsstaaten:
**BE FR GB NL**

(56) Entgegenhaltungen:
**FR - A - 939 239**
**US - A - 3 431 384**
**US - A - 3 740 517**

(73) Patentinhaber: **SIEMENS AKTIENGESELLSCHAFT**
**Berlin und München**
**Postfach 22 02 61**
**D-8000 München 22 (DE)**

(72) Erfinder: **Lindner, Kurt**
**Senftenauerstrasse 146**
**D-8000 München 21 (DE)**

Courier Press, Leamington Spa, England.

## Verfahren zum Trennen eines eine Vielzahl von Drähten aufweisenden Seiles

Die Erfindung bezieht sich auf ein Verfahren zum Trennen eines aus einer Vielzahl von Drähten bestehenden Seiles, vorzugsweise für elektrische Leitzwecke, indem man das Seil beidseitig von seiner Trennstelle in Kontaktblöcken eingespannt hält und durch das Seil einen das Schmelzen des Seiles verursachenden Strom leitet.

Durch die FR—A 1 016 329 ist eine Vorrichtung bekannt, bei der das zu trennende Seil beidseitig seiner Trennstelle in Kontaktblöcken eingespannt und durch das Seil ein Wechsel- oder Gleichstrom geleitet wird, welcher das Schmelzen des Seils bewirken soll. Dadurch, daß die Kontaktblöcke sehr massiv ausgeführt sind, kann ein Teil der im Seil entstehenden Wärme über die Kontaktblöcke abfließen, so daß die das Schmelzen des Seiles verursachende Temperaturspitze in die Mitte zwischen den beiden Kontaktblöcken verlagert wird. Bei dieser bekannten Vorrichtung ist jedoch nicht sichergestellt, daß die Enden des Seils auch so verschweißt werden, daß ein Aufspleißen tatsächlich verhindert wird.

Durch die FR—A 939 239 ist eine Vorrichtung bekannt, mit der mehrere Drähte mit Hilfe zweier im Abstand voneinander angeordneter Elektroden verschweißt werden können, wenn man an die Elektroden eine entsprechend hohe Spannung anlegt. Hierbei wird vorgeschlagen, daß die Spannung so hoch gewählt wird, daß die Enden der Drähte zu einem Klumpen verschweißen. Mit dieser bekannten Vorrichtung läßt sich keine definierte Trennstelle erzielen, so daß sie zum Ablängen eines Seils nicht geeignet ist.

Durch die US—A 3 740 517 ist eine Vorrichtung zum Abtrennen eines Seils bekannt, mit der die durch Schmelzen getrennten Drähte an den Enden verschweißt werden. Betrieben wird diese Vorrichtung mit einer sehr niedrigen Spannung von maximal 5 Volt und einem entsprechend hohem Strom. Da diese Spannung weit unter der Lichtbogenspannung (etwa 21 Volt) liegt, werden die einzelnen Drähte an den Enden für viele Anwendungszwecke nur ungenügend fest verschweißt. Sollen beispielsweise an diese Enden Kontakte oder dgl. geschweißt werden, so ist dies nicht ohne weiteres möglich, weil die Enden wiederum aufspleißen.

Durch die US—A 3 431 384 ist eine Vorrichtung zum Ablängen von Seiten oder dgl. bekannt, bei der das Seil nicht fest eingespannt wird, sondern durch Quecksilberkontakte bewegt wird, die mit entsprechenden Elektroden in Verbindung stehen. Bei dieser bekannten Vorrichtung wird zum Abtrennen ein definierter Stromimpuls verwendet, der so bemessen ist, daß an der Trennstelle der Schmelzpunkt nur knapp überschritten wird. Daher werden auch bei dieser bekannten Vorrichtung die Enden der Seile nur ungenügend fest verschweißt.

Der Erfindung liegt die Aufgabe zugrunde, ein Verfahren zu schaffen, mit dem nicht nur eine einwandfreie Trennung des Seils erzielbar ist, sondern mit dem auch die Enden so verschweißt werden können, daß ein Aufspleißen keinesfalls mehr auftreten kann. Das erfindungsgemäße Verfahren besteht darin, daß man den zum Trennen des Seils erforderlichen Strom in mehreren Impulsen durch das Seil führt, wobei der das Durchschmelzen des Seils verursachende Impuls einen elektrischen Lichtbogen zieht, der zum Verschweißen der Drahtenden an der Trennstelle des Seils dient. Durch die Aufteilung des zum Trennen erforderlichen Stromes in mehrere Impulse läßt sich eine sehr genaue. Wämesteuerung erzielen, wobei die das Schmelzen des Seils verursachende Temperatur spitze in die Mitte zwischen den beiden Einspannstellen legbar ist, da ein Teil der im Seil entstehenden Wärme über die Kontaktblöcke abgeführt wird. Dadurch, daß der letzte Impuls einen elektrischen Lichtbogen zieht, werden die Leiterenden an der Trennstelle durchgehend ballig verschweißt, so daß ein Aufspleißen der Enden unter keinen Umständen mehr auftritt.

Möchte man Draht seile mit verschiedenen Querschnitten gemäß dem erfinderischen Verfahren trennen, so ist es erforderlich, in Abhängigkeit vom Querschnitt des Seiles die Energie durch die Anzahl und Form der Impulse zu bemessen. Die Impulsenergie kann durch Phasenanschnitt und Impulsformung geändert werden. Vorteilhaft ist es, wenn man unabhängig vom Querschnitt des Seiles, die zu seinem Trennen erforderlichen Impulse auf eine feste Anzahl beschränkt, vorzugsweise auf sieben Impulse, wobei man zwischen jedem Impuls eine Pause von vorzugsweise drei Netzperioden beläßt. Man arbeitet hierbei mit einer elektrischen Spannung zwischen 20 bis 30 Volt, unabhängig vom Querschnitt des zu trennenden Kabels. So ist es möglich, nur durch einen einstellbaren Phasenanschnitt, Seile mit einem Querschnitt von 0,5 bis 30 mm² einwandfrei zu trennen. Der richtige bzw. günstigste Abstand der Klemmbacken muß jeweils durch Vorversuche ermittelt werden. Es versteht sich, daß auch Seile mit einem größeren Querschnitt bei einer entsprechend größer bemessenen Leistungsaufnahme nach dem beschriebenen Verfahren trennbar sind. Zur Verkürzung der Abkühlzeiten der Klemmbacken und zur Erhöhung der Nutzungsgeschwindigkeit der Vorrichtung ist es vorteilhaft, die das Seil beim Trennen haltenden Kontaktblöcke zu kühlen.

Weitere Einzelheiten der Erfindung sind aus den Unteransprüchen ersichtlich.

Im nachfolgenden wird anhand der Zeichnung das erfinderische Verfahren näher erläutert.

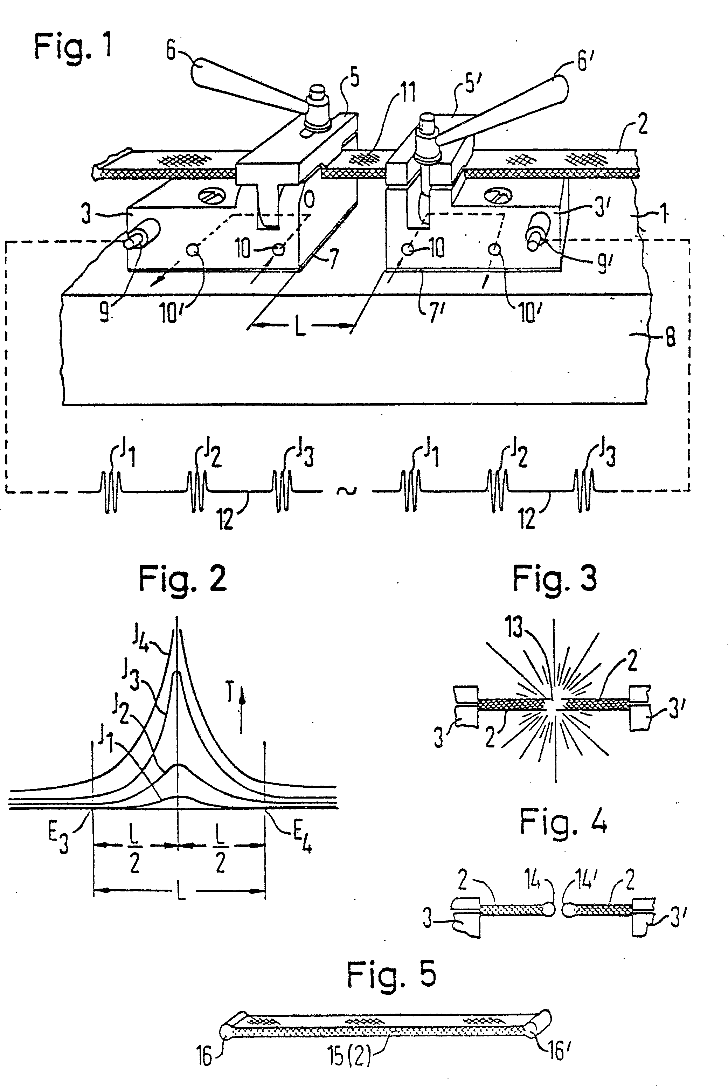

Figur 1 zeigt eine Vorrichtung 1 zum Trennen eines aus einer Vielzahl von Drähten gebildeten Seiles, z.B. eines isolationsfreien Flachbandkabels 2. Zwei Kontaktblöcke 3 und 3' sind zur Vermeidung des Anbackens von Metallspritzer und zur guten Kontaktgabe aus einem Sintermetall-Kontaktwerkstoff gebildet; sie besitzen jeweils eine Klemmvorrichtung 5 bzw. 5', die hier mittels Handhaben 6, 6' lösbar sind. Die Kontaktblöcke sind voneinander mittels Zwischenlagen 7, 7' isoliert auf einem Werktisch 8 befestigt. In den Kontaktblöcken sind Kühlkanäle 10, 10' für die Zu- und Abfuhr eines Kühlmittels eingebracht. Jeder Kontaktblock besitzt einen Anschluß 9 bzw. 9', mittels welchem er mit einem Ausgang eines hier nicht dargestellten Schweißtransformators verbunden ist. Ein Schweißstromtakter liefert, wie bei 12 dargestellt, Stromimpulse $I_1$, $I_2$, derart, daß sich der zwischen den Kontaktblöcken gelegene Abschnitt 11 des Seiles 2 erwärmt. Die Kontaktblöcke besitzen einen gegenseitigen Abstand L entsprechend dem Abschnitt 11 des Kabels 2.

Figur 2 zeigt in Form eines Diagramms den Verfahrensablauf. Auf der Abszisse bedeutet L der gegenseitige Abstand der Kontaktblöcke 3 und 4 (Figur 1). Die Ordinate zeigt den Temperaturverlauf im Abschnitt 11 des Seiles 2. Wie aus dem Diagramm ersichtlich, steigt mit jedem Stromimpuls, und zwar in der Mitte des Abschnittes 11 (Figur 1) die Temperatur wesentlich stärker an als im Bereich der Einspannstellen $E_3$ bzw. $E_4$. Bedingt dadurch, daß die vom Seil aufgenommene Wärme von den Kontaktblöcken schnell abgeführt wird, erfolgt der Wärmeanstieg im Bereich der Einspannstellen des Seiles vergleichsweise langsam. Dies hat zur Folge, daß z.B. beim vierten Stromimpuls $I_4$, und zwar mittig im Abschnitt 11 (Figur 1), das Seil durchschmelzt. Vorzugsweise beschränkt man die Anzahl der Impulse auf sieben; mit zunehmender Anzahl der Impulse steigt die Temperatur der Kontaktblöcke, so daß ein ordnungsgemäßer Verfahrensablauf bei zu hoher Erwärmung des Seiles an den Einspannstellen in Frage gestellt werden könnte.

Wie weiter aus den Figuren 3 und 4 zu ersehen ist, erfolgt das Durchschmelzen des Seiles 2 plötzlich, innerhalb eines der Impulsintervalle. Beim Durchschmelzen entsteht ein Lichtbogen 13, unter dessen Einfluß (Figur 4) die Grenzflächen 14, 14' des Kabels 2 ballig verschweißen.

Figur 5 zeigt eine Kabellasche 15 mit an den jeweiligen Enden 16, 16' verschweißten Drähten.

## Patentansprüche

1. Verfahren zum Trennen eines aus einer Vielzahl von Drähten bestehenden Seils, vorzugsweise für elektrische Leitzwecke, indem man das Seil beidseitig von seiner Trennstelle in Kontaktblöcken eingespannt hält und durch das Seil einen das Schmelzen des Seils verursachenden Strom leitet, dadurch gekennzeichnet, daß man den zum Trennen des Seils (2) erforderlichen Strom in mehreren Impulsen ($I_1$, $I_2$...) durch das Seil führt, wobei der das Durchschmelzen des Seils verursachende Impuls einen elektrischen Lichtbogen zieht, der zum Verschweißen der Drahtenden an der Trennstelle des Seils dient.

2. Verfahren nach Anspruch 1, dadurch gekennzeichnet, daß man das zu trennende Seil an seinen beiden Einspannstellen kühlt.

3. Verfahren nach Anspruch 1 oder 2, dadurch gekennzeichnet, daß man in Abhängigkeit von den Abmessungen des Seiles die zu seinem Trennen erforderliche elektrische Energie durch die Anzahl der Impulse ($I_1$, $I_2$...) bemißt.

4. Verfahren nach Ansprüchen 1 bis 3, dadurch gekennzeichnet, daß man unabhängig vom Querschnitt des zu trennenden Seiles die Anzahl der Impulse ($I_1$, $I_2$...) auf sieben beschränkt und zwischen jedem Impuls eine drei Netzperioden betragende Pause einhält.

## Revendications

1. Procédé pour opérer une séparation dans un câble constitué par plusieurs fils, de préférence dans un câble électrique, du type dans lequel on serre le câble, de part et d'autre de l'emplacement de la séparation à réaliser, dans des blocs de contact et dans lequel on fait passer dans le câble un courant qui en provoque la fusion, caractérisé par le fait que l'on fait passer par le câble (2) le courant nécessaire pour sa séparation, sous la forme de plusieurs impulsions ($I_1$, $I_2$...), l'impulsion qui provoque la fusion du câble créant un arc électrique qui sert à souder les extrémités des fils au niveau de l'emplacement de la séparation.

2. Procédé selon la revendication 1, caractérisé par le fait que l'on refroidit le câble à séparer au niveau des deux emplacements où le câble est serré dans des blocs.

3. Procédé selon la revendication 1 ou 2, caractérisé par le fait qu'en fonction des dimensions du câble, l'énergie électrique qui est nécessaire pour opérer la séparation est calculée au moyen du nombre des impulsions ($I_1$, $I_2$...).

4. Procédé selon les revendications 1 à 3, caractérisé par le fait qu'indépendamment de la section transversale du câble dans lequel on souhaite opérer une séparation, le nombre des impulsions ($I_1$, $I_2$...) est limité à sept et qu'entre chaque impulsion on respecte une pause qui correspond à trois périodes du réseau.

## Claims

1. Process for severing a cable consisting of a plurality of wires, particularly for electrical conduction purposes, in which the cable is clamped in contact blocks on both sides of the severing point and a current is passed through the cable which causes melting thereof, characterised in that the current required for severing the cable (2) is passed through the cable in a plurality of pulses $(I_1, I_2 ...)$, the pulse which causes the cable to melt through draws an electric arc which serves to weld together the wire ends at the severing point.

2. Process as claimed in Claim 1, characterised in that the cable to be severed is cooled at both its clamping points.

3. Process as claimed in Claim 1 or 2, characterised in that, in dependence upon the dimensions of the cable, the electric energy required for severing it is regulated by the number of the pulses $(I_1, I_2...)$.

4. Process as claimed in Claims 1 to 3, characterised in that, independently of the cross-section of the cable to be severed, the number of the pulses $(I_1, I_2...)$ is limited to seven and an interval amounting to three mains periods is included between each pulse.

**0 001 557**

Fig. 1

Fig. 2

Fig. 3

Fig. 4

Fig. 5